# EUROPÄISCHE PATENTSCHRIFT

(11) **EP 2 452 095 B1**
(45) Veröffentlichungstag und Bekanntmachung des Hinweises auf die Patenterteilung: **17.04.2013**
(21) Anmeldenummer: 10729864.8
(22) Anmeldetag: 05.07.2010
(51) Int. Cl.: F16D 65/12

(54) **ALS GUSSTEIL AUSGEBILDETE BREMSSCHEIBE**
BRAKE DISC IMPLEMENTED AS A CASTING
DISQUE DE FREIN SE PRÉSENTANT SOUS LA FORME D'UNE PIÈCE MOULÉE

(30) Priorität: 06.07.2009 DE 102009032007
(43) Veröffentlichungstag der Anmeldung: 16.05.2012
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE); BAUMGARTNER, Johann, 85368 Moosburg (DE)
(74) Vertreter: Mattusch, Gundula
(86) Internationale Anmeldenummer: PCT/EP2010/059554
(87) Internationale Veröffentlichungsnummer: WO 2011/003859

(56) Entgegenhaltungen:
- WO-A1-02/101259
- WO-A1-2009/045162
- DE-A1- 10 227 529

## Beschreibung

Die Erfindung betrifft eine als Gussteil ausgebildete Bremsscheibe nach dem Oberbegriff des Anspruchs 1.

Derartige Bremsscheiben, die sowohl in Pkws wie auch in Nutzfahrzeugen zum Einsatz kommen, werden üblicherweise aus Grauguss hergestellt, wobei eine stoffliche Trennung des Reibringes vom Hals der Bremsscheibe erfolgt, so dass eine relative radiale Bewegung des Reibringes gegenüber dem Hals möglich ist, durch die Spannungen vermieden werden, wie sie durch eine wärmebedingte radiale Ausdehnung des Reibringes auftreten können mit der Folge von Hitzerissen.

Es sind Bremsscheiben bekannt, die ohne den Reibring und den Hals trennende Gleitelemente hergestellt werden, wobei üblicherweise zunächst der Hals gegossen und dessen Verbindungsbereich mit dem Reibring mit einer sogenannten Schlichte versehen wird, so dass der anschließend angegossene Reibring keine metallische Bindung mit dem Hals eingeht.

Dies ermöglicht zwar unterschiedliche Werkstoffpaarungen, allerdings ist die Herstellung einer solchen Bremsscheibe relativ teuer und daher für die Herstellung eines Serienprodukts, wie es eine solche Bremsscheibe darstellt, im Grunde inakzeptabel.

Solche Bremsscheiben sind beispielsweise aus der EP 1 972 823 A1 oder DE 1 98 43 399 A1 bekannt.

Eine weitere, auch als Vergussbremsscheibe bekannte Bremsscheibe ist in der DE 102 27 529 A1 geoffenbart. Darin wird vorgeschlagen, die Gleitelemente als Hülsen auszubilden, von denen eine innere fest mit einem im Querschnitt kreisrunden Zapfen des Halses und eine darauf axial verschiebbar geführte äußere Hülse fest mit dem Reibring verbunden ist, wobei das Gleitelement, also beide Hülsen, bei der einstückigen Herstellung des Halses und des Reibringes durch Gießen mit eingegossen werden.

Allerdings ist hierbei der Durchmesser des Zapfens und damit die Aufnahme der beim Bremsen entstehenden Momente relativ stark eingeschränkt, da abhängig von der Dicke des Reibringes bzw. von der zugeordneten Breite der gebildeten Kühlkanäle. Um eine ausreichend stabile Verbindung zwischen dem Reibring und dem Hals herzustellen, ist daher eine entsprechend hohe Anzahl von Verbindungselementen, d.h., von Zapfen und Hülsen erforderlich, die im Sinne der Erfindung die Zahnkränze bilden.

Naturgemäß ist dies nur mit einem entsprechend hohen Fertigungsaufwand und Materialeinsatz möglich, was der stets gestellten Forderung nach einer Minimierung der Herstellungskosten entgegensteht.

In der DE 195 05 112 A1 ist eine Bremsscheibe gezeigt und beschrieben, die nicht innen belüftet ist, sondern einen massiven Reibring aufweist, der stofflich vom Hals durch Gleitelemente getrennt ist, die zusammenhängend aus einem mäanderförmigen Blechstreifen gebildet sind. Diese Konstruktion ist jedoch in ihrer Funktion insoweit eingeschränkt, als sie für den Einsatz einer innen belüfteten Bremsscheibe nicht geeignet ist.

Der Erfindung liegt die Aufgabe zugrunde, eine Bremsscheibe der gattungsgemäßen Art so weiterzuentwickeln, dass ihre Herstellung einfacher und damit kostengünstiger ist, ihre Standzeit erhöht und ihr Gewicht minimiert wird.

Diese Aufgabe wird durch eine Bremsscheibe mit den Merkmalen des Anspruchs 1 gelöst.

Eine solche Bremsscheibe zeichnet sich zunächst einmal durch ihre außerordentlich einfache Herstellung aus. So können die beispielsweise aus einem Blechstreifen geformten Gleitelemente, vorzugsweise aus rostfreiem Stahl mit einem höheren Schmelzpunkt als der des Gussmaterials des Reibringes und des Halses in die Gießform eingelegt werden und zwar dort in die Gießkerne für Lüftungskanäle des Reibringes.

Beim anschließenden Gießen der Bremsscheibe werden die Elemente von beiden Außenseiten in die Bremsscheibe mit eingegossen, wobei sich bei einer entsprechenden Gestaltung der Reibring und der Hals einstückig gießen lassen.

Bei einer anschließenden spanenden Bearbeitung, wie sie bislang schon erforderlich ist, erfolgt ein Abdrehen des Halses in radialer Richtung bis die eingeschlossenen Gleitelemente frei liegen.

Hierdurch werden sowohl der Außenzahnkranz des Halses wie auch der Innenzahnkranz des Reibringes gebildet, die damit stofflich nicht mehr miteinander verbunden sind. Durch die Drehbearbeitung entstehen somit zwei getrennte, radial zueinander bewegbare Bauteile.

Durch entsprechende Formgebung der Gleitelemente wird ein in axialer Richtung wirkender Formschluss des Halses und des Reibringes erreicht, wozu beispielsweise in den Gleitelementen sich radial erstreckende Sicken vorgesehen sein können, die die radiale Bewegung des Reibringes zum Hals von 1 - 2 mm zulassen, jedoch eine axiale Bewegung soweit ausschließen, dass sie lediglich in einem Bereich < 0,1 mm liegt.

Ein weiterer Gedanke der Erfindung sieht vor, dass das Gleitelement zweilagig ausgebildet ist, wobei eine der beiden aneinander liegenden Lagen formschlüssig am Reibring und die andere Lage formschlüssig am Hals gehalten ist. Auch hierbei ist die Konfiguration so gewählt, dass eine behinderungsfreie radiale Bewegbarkeit des Reibringes möglich ist, bei der dann die aneinander liegenden planen Flächen der beiden Lagen sich gegeneinander verschieben.

Bei einer einlagigen Ausbildung der Gleitelemente ist eine einseitige Beschichtung sinnvoll, mit der eine Verbindung des Gleitelementes mit dem zugeordneten Gussteil verhindert wird.

Jedes Gleitelement ist im Grundriss U-förmig ausgebildet und umschließt einen Zahn des Innenzahnkranzes dreiseitig, wobei der die parallel ausgerichteten Schenkel verbindende Steg in den Hals eingebettet ist und sich radial erstreckt.

Um dem Reibring in jedem Fall, also auch bei einem möglichen Verzug der Elemente beim Gießen die Möglichkeit einer radialen Ausdehnung zu geben, sind die Schenkel des U-förmigen Gleitelementes in radialer Richtung unter einem Winkel zueinander angeordnet, so dass sich in Richtung der Mittelachse eine Verjüngung bzw. entgegengesetzt eine Erweiterung ergibt. Bevorzugt sind die Schenkel um einen Winkel im Bereich von 10 - 30° zueinander geneigt.

Vor der Umformung liegt das Gleitelement als Blechstreifen vor, an den in dem Bereich, der bei der nachfolgenden Umformung den Steg bildet, eine keilförmige Ausklinkung im Sinne eines Freischnitts eingebracht wird, dessen Keilwinkel dem Winkel entspricht, unter dem die beiden Schenkel des Gleitelementes zueinander verlaufen. Hierdurch wird eine Optimierung des Materialeinsatzes erreicht, da der eingesetzte Rohling aus einem rechteckigen Streifen gebildet werden kann, beispielsweise durch Ablängen von Bandmaterial.

Im Übrigen sind von den Gleitelementen, im Gegensatz zu denen nach dem Stand der Technik, die auf Biegung, Druck und/oder Zug beansprucht werden, lediglich von Bremsmomenten abhängige Druckkräfte aufzunehmen bzw. zu übertragen.

Weitere vorteilhafte Ausbildungen sind in den Unteransprüchen gekennzeichnet.

Ein Ausführungsbeispiel der Erfindung wird nachfolgend anhand der beigefügten Zeichnungen beschrieben.

Es zeigen:
- Figuren 1 bis 3: jeweils eine als Gussteil ausgebildete Bremsscheibe als Rohteil vor einer Endbearbeitung, in unterschiedlichen Ansichten
- Figur 4: die fertig bearbeitete Bremsscheibe in einer perspektivischen Ansicht
- Figur 5: einen vergrößerten Ausschnitt der Bremsscheibe in einer Vorderansicht
- Figur 6: die Bremsscheibe teilweise längs geschnitten, ebenfalls schaubildlich dargestellt
- Figur 7: einen vergrößerten Teilausschnitt der Bremsscheibe in einer geschnittenen Vorderansicht
- Figur 8: die Bremsscheibe mit einem Teilausbruch in einer perspektivischen Darstellung
- Figur 9: eine Einzelheit der Bremsscheibe in zwei verschiedenen Ansichten
- Figur 10: einen Rohling des Gleitelementes vor einer Umformung in einer perspektivischen Ansicht
- Figuren 11 und 12: den Rohling nach der Umformung in verschiedenen Umformschritten
- Figur 13: ein weiteres Ausführungsbeispiel eines Gleitelementes in einer perspektivischen Ansicht
- Figur 14: das Gleitelement nach Figur 13 in einer geschnittenen Seitenansicht
- Figur 15: einen Teilausschnitt des Gleitelementes nach Figur 13 in einer geschnittenen Draufsicht.

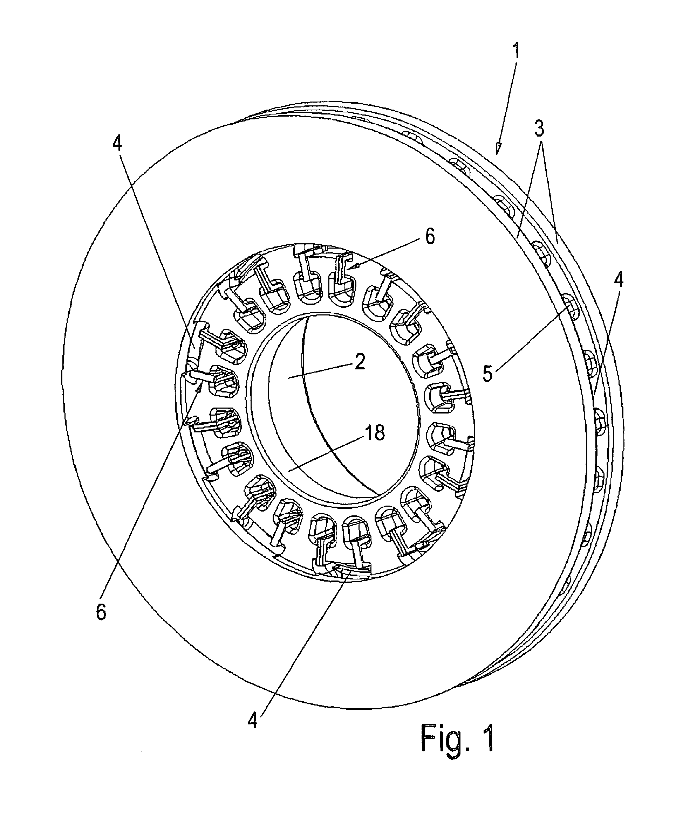

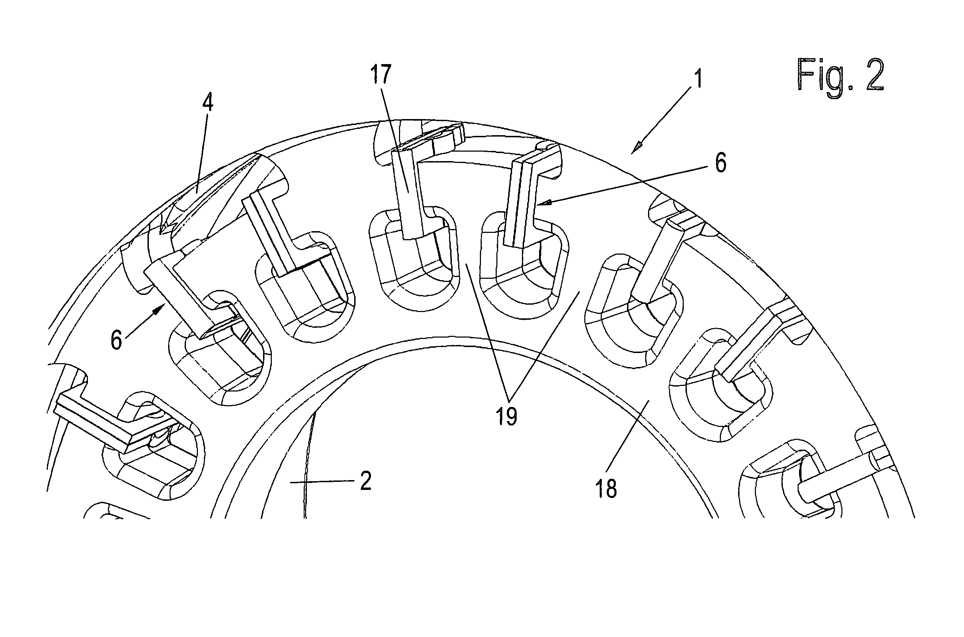

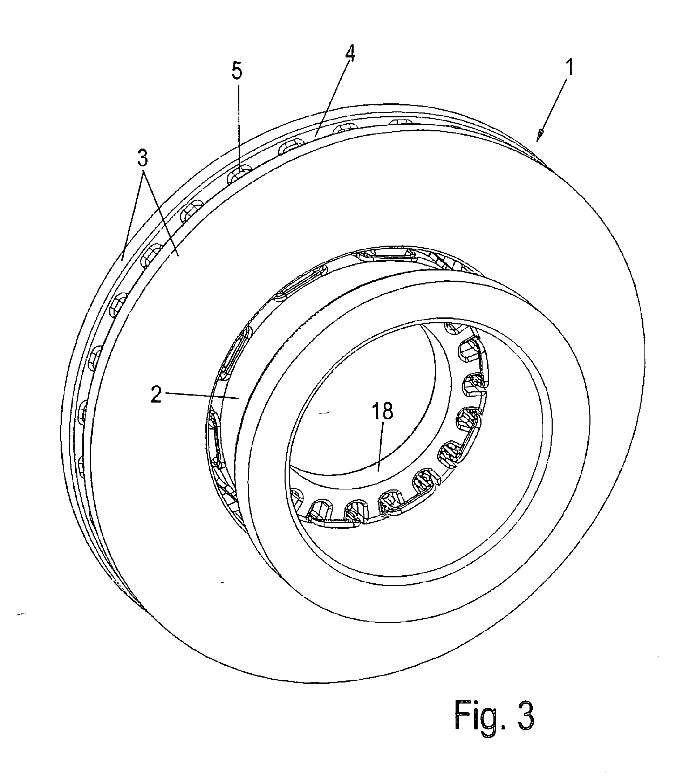

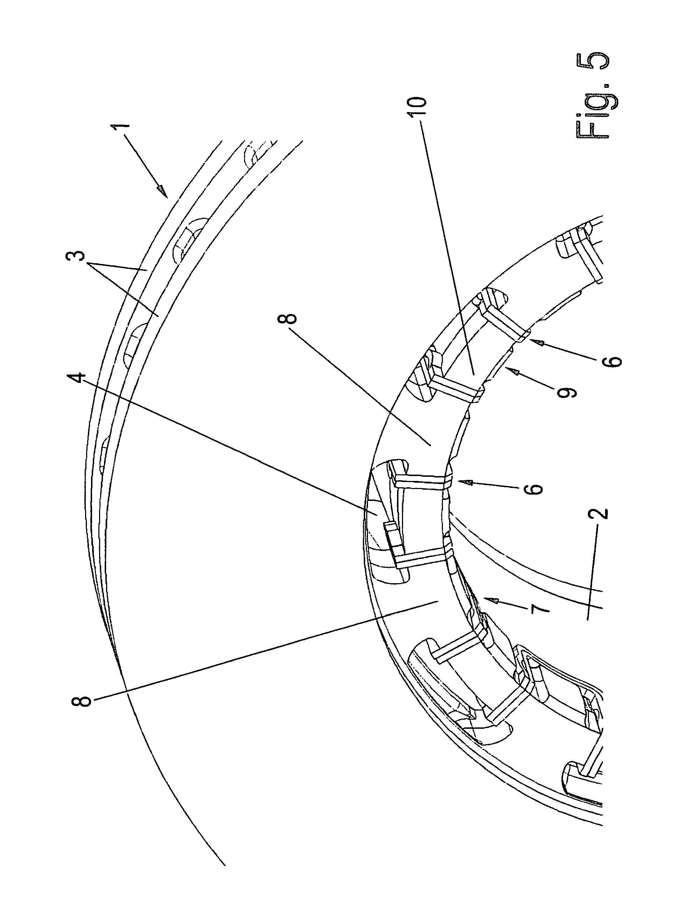

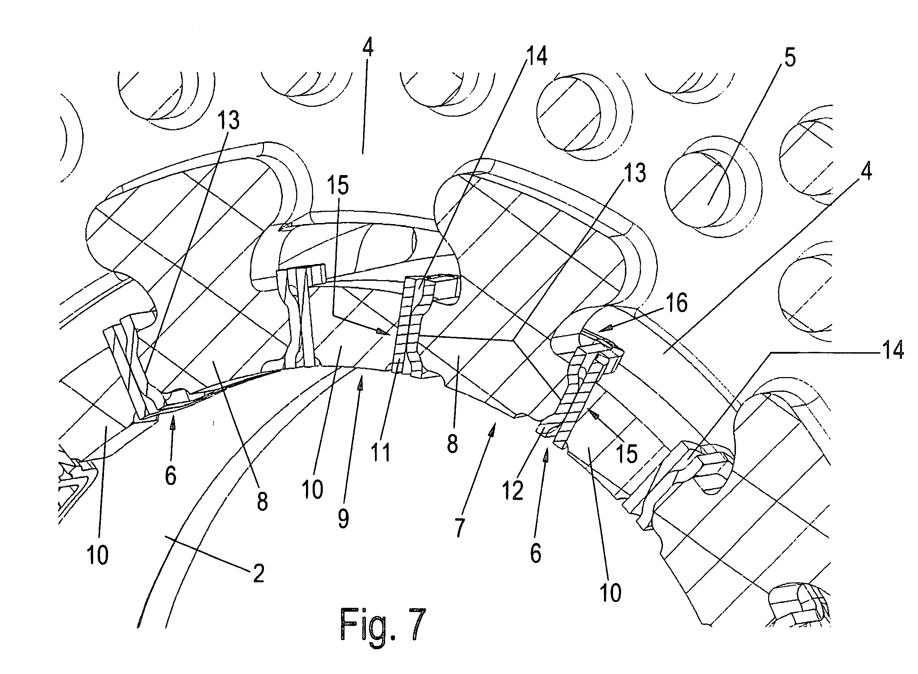

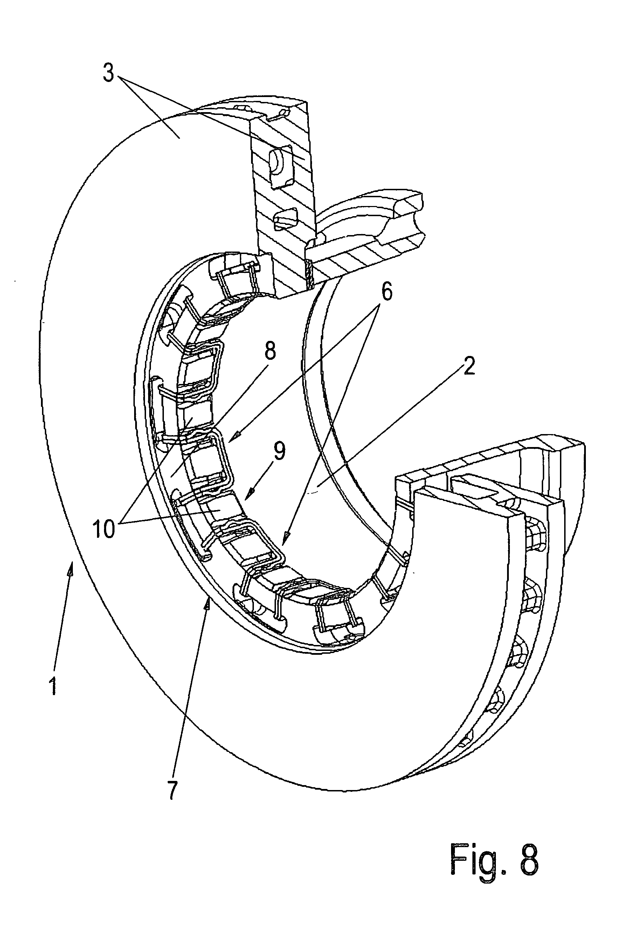

In den Figuren 1 bis 8 ist eine als Gussteil ausgebildete, innen belüftete Bremsscheibe dargestellt.

Diese Bremsscheibe weist einen Reibring 1 mit zwei parallel und abständig zueinander angeordneten Reibkörpern 3 auf, die durch Stege 5, unter Bildung von Kühlkanälen 4 miteinander verbunden sind.

An dem Reibring 1 ist stofflich getrennt und verdrehsicher ein Hals 2 gehalten, der mit einer nicht dargestellten Radnabe verbindbar ist, beispielsweise durch Verschrauben.

Die stoffliche Trennung des Reibringes 1 und des Halses 2 ermöglicht in radialer Richtung eine Relativbewegung zueinander, wozu eingegossene Gleitelemente 6 vorgesehen sind, die aus einem Material mit einem höheren Schmelzpunkt bestehen als der Reibring 1 und der Hals 2. Dabei können die Gleitelemente 6 aus einem metallischen, aber auch aus einem nichtmetallischen Werkstoff bestehen, beispielsweise Keramik.

Der Reibring 1 weist einen Innenzahnkranz 7 auf, mit Zähnen 8, der in einen Außenzahnkranz 9, mit Zähnen 10 des Halses 2 eingreift, wobei zwischen den einander zugewandten radialen Seitenflächen der Zähne 8, 10 die Gleitelemente 6 angeordnet sind.

In den Figuren 1 bis 3 ist die bereits gegossene, jedoch noch nicht endbearbeitete Bremsscheibe dargestellt, bei der der Hals 2 einen konzentrischen, radial nach innen ausgerichteten angegossenen Bund 18 aufweist, der über Verbindungsstege 19 mit dem im Übrigen in jeder Mittelebene spiegelsymmetrisch ausgebildeten Reibring 1 verbunden ist.

Zur Herstellung der Bremsscheibe werden die in gleichem Winkelabstand angeordneten Gleitelemente 6, im Beispiel als zweilagige Blechformteile ausgebildet, jeweils in den Gießkern für den zugeordneten Lüftungskanal 4 der Bremsscheibe teilweise eingebettet. Beim folgenden Gießen der Bremsscheibe wird das Gleitelement von beiden Außenseiten in die Bremsscheibe mit eingegossen. Dabei lassen sich der Reibring 1 und der Hals 2 einstückig ausbilden.

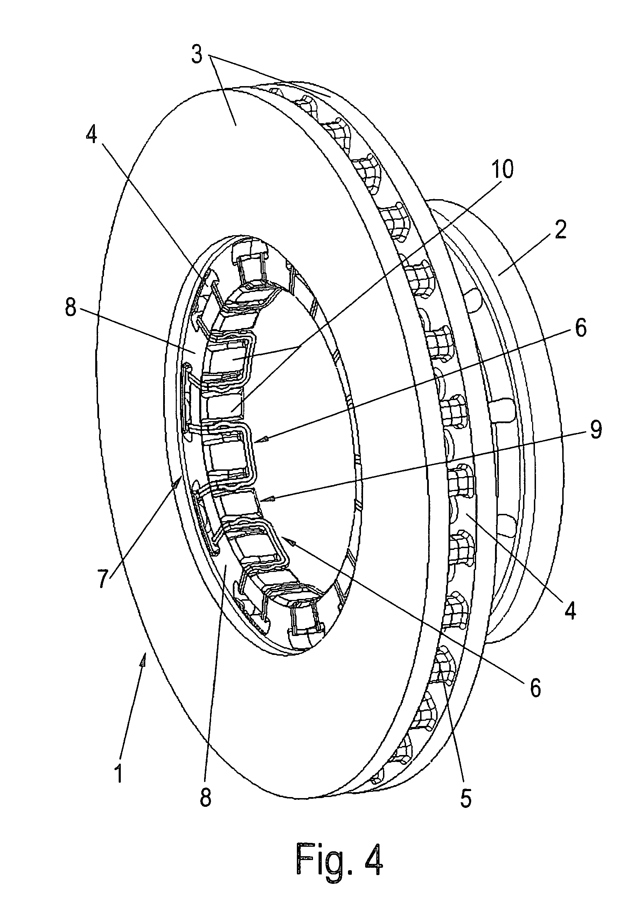

In den Figuren 4 - 8 ist die fertig bearbeitete Bremsscheibe gezeigt, bei der der Bund 18 und die Verbindungsstege 19 des in den Figuren 1 - 3 gezeigten Rohlings vollständig spanend entfernt sind, so dass die in den Figuren 4 - 8 gezeigte Ausbildung entsteht, bei denen die Zähne 8, 10 innenseitig bündig mit den Gleitelementen 6 abschließen.

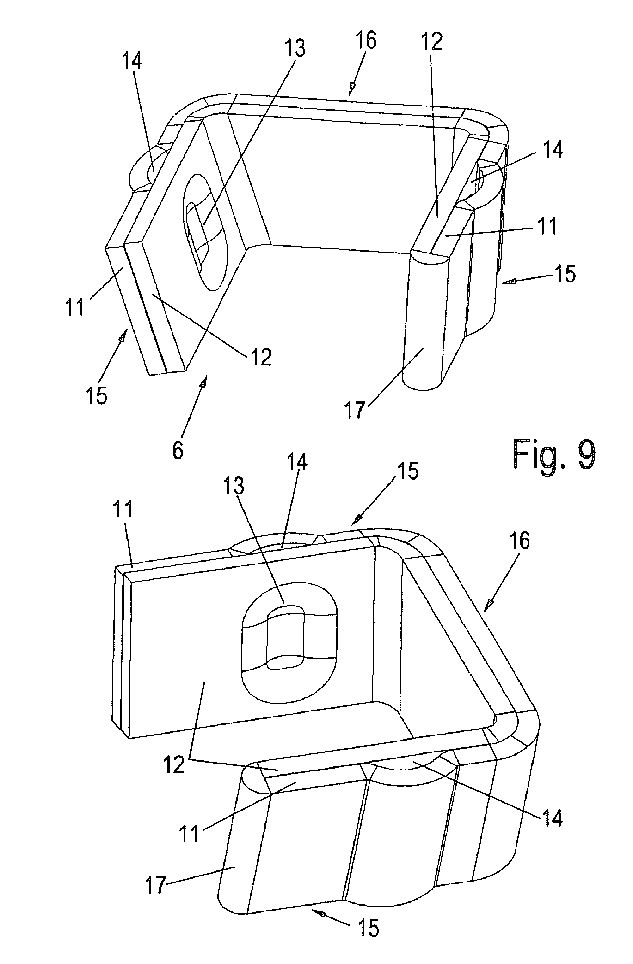

Ein solches Gleitelement 6 ist als Einzelheit auch in der Figur 9 gezeigt.

Darin ist erkennbar, dass das Gleitelement, wie erwähnt, als zweilagiges, U-förmiges Blechformteil ausgebildet ist, mit einer Außenlage 11 und einer Innenlage 12, die weitgehend flächig aneinander liegen und jeweils parallel ausgerichtete Schenkel 15 bilden, die durch einen gleichfalls zweilagigen Steg 16 miteinander verbunden sind.

In der Figur 9 ist das Gleitelement 6 als Rohling gezeigt, wie er in die Gießform eingelegt wird. Es ist zu erkennen, dass er hierbei eine die Außen- und Innenlage 11, 12 des einen Schenkels miteinander verbindende Biegekante 17 aufweist, die bei der nach dem Gießen erfolgenden Bearbeitung gleichfalls spanend entfernt wird, so dass in Funktion die Außen- und Innenlage 11, 12 radial gegeneinander verschiebbar sind.

Zur axialen Sicherung des Halses 2 gegenüber dem Reibring 1 weisen die beiden Innenlagen 12 nach außen gestülpte Vorsprünge 13 auf, die in radial ausgerichtete Sicken 14 der Außenlage 11 eingreifen, die damit eine radiale Führung bilden, wobei die durch die Sicken 14 entstandene Ausprägung in Richtung des Zahnes 10 einen Formschluss mit dem Hals 2 bildet, während die Einprägung des Vorsprungs 13 einen solchen Formschluss mit dem Zahn 8 des Innenkranzes 7 bildet.

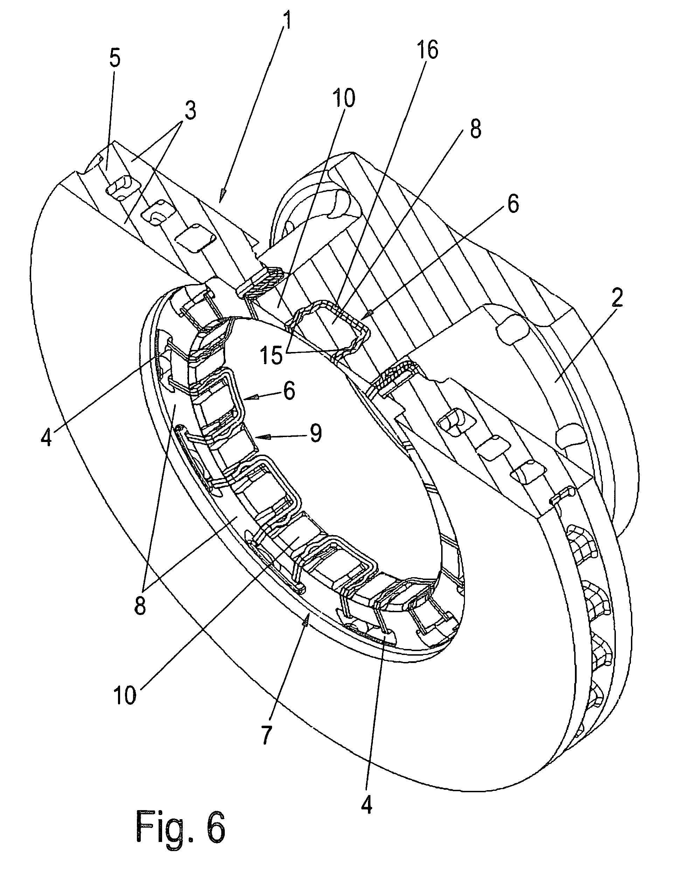

Wie insbesondere die Figur 6 sehr deutlich zeigt, trennt der Steg 16 ebenso wie die Schenkel 15 den Zahn 8 des Innenkranzes 7 von den benachbarten Zähnen 10 des Außenkranzes 9, so dass keine stoffliche Verbindung zwischen dem Hals 2 und dem Reibring 1 gegeben ist.

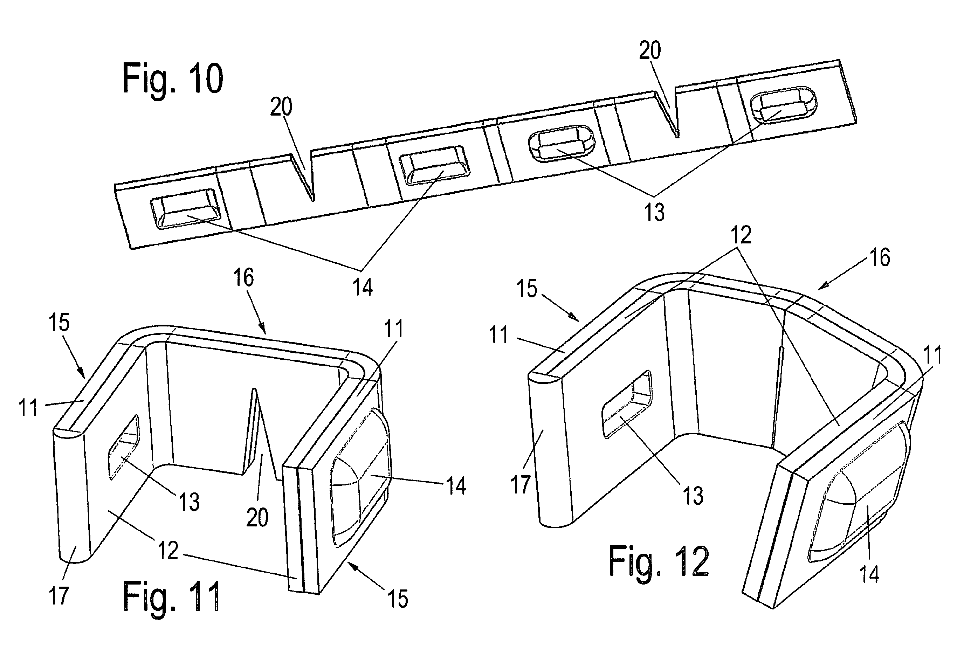

In der Figur 10 ist das Gleitelement 6 als teilweise bearbeiteter Rohling dargestellt, der aus einem Blechstreifen besteht, in den bereits die Vorsprünge 13 und Sicken 14 eingeprägt sind.

In die Bereiche, die bei der folgenden Umformung den zweilagigen Steg 16 des Gleitelementes 6 bilden, sind keilförmige Ausklinkungen 20 eingebracht.

In den Figuren 11 und 12 ist jeweils ein weiterer Fertigungsschritt zur Herstellung des Gleitelementes 6 dargestellt, wobei in der Figur 11 der Blechstreifen gemäß Figur 10 gefaltet ist, so dass sich die zweilagige U-Form ergibt.

In der Figur 12 ist das in die Gießform einzusetzende Gleitelement erkennbar, das entsprechend der Ausklinkung 20 so weit verformt ist, dass sich eine Schrägstellung der Schenkel 15 unter einem Winkel von etwa 10 - 30° zueinander ergibt.

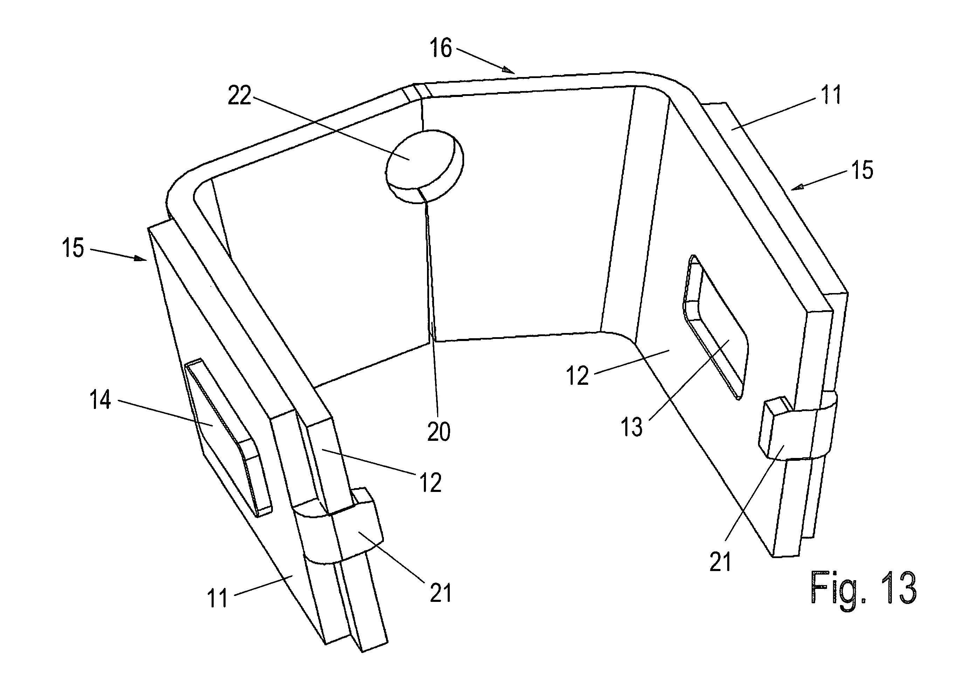

Die Figuren 13 - 15 zeigen ein weiteres Ausführungsbeispiel des Gleitelementes 6, bei dem lediglich die beiden Schenkel 15 zweilagig ausgebildet sind.

Das dargestellte Gleitelement entspricht dem Zustand, wie es in die Gussform eingesetzt wird. Zur Fixierung der Außenlage 11 ist daran eine Haltezunge 21 angeformt, die in eine an der dem Steg 16 gegenüberliegenden freien Stirnseite der Innenlage 12 vorgesehene, angepasste Ausnehmung reib- und/oder formschlüssig eingreift.

Bei der nach dem Gießen der Bremsscheibe erfolgenden spanenden Endbearbeitung werden die Haltezungen 21, wie bereits zur Biegekante 17 beschrieben, entfernt.

Für eine einfachere Umformung zur Schrägstellung der Schenkel 15 mündet die Ausklinkung 20 in einen Freischnitt 22.

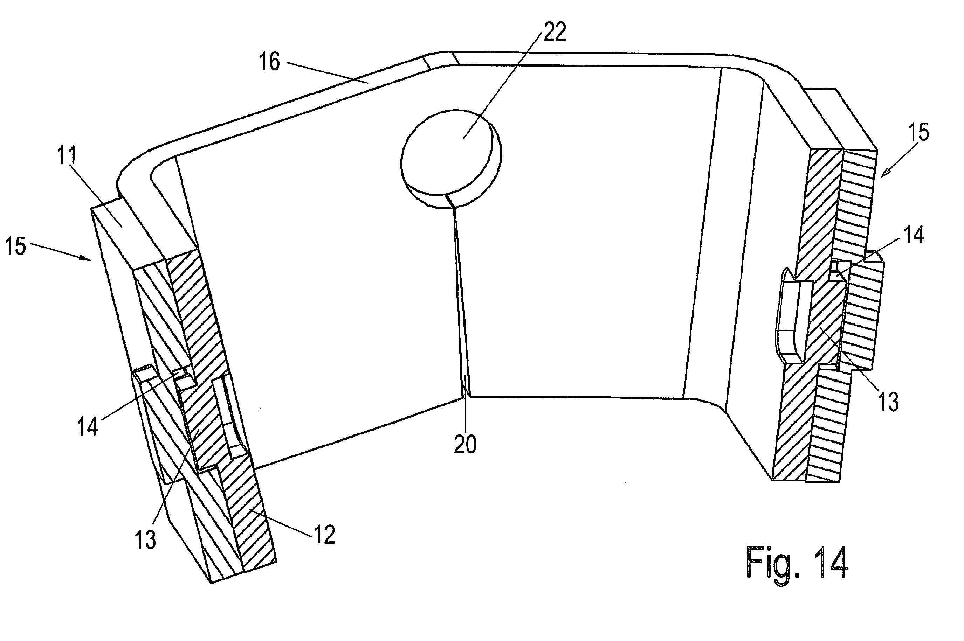

Das Gleitelement 6 gemäß der Figur 13, aber auch bei der Variante nach Figur 12, ist die Sicke 14 in radialer Richtung lediglich bereichsweise eingebracht und dabei größer als der einliegende Vorsprung 13 der Innenlage 12 und zwar etwa 1 - 2 mm. Die radiale Relativbewegung des Reibringes zum Hals ist damit begrenzt. Dies ist besonders deutlich in der Figur 14 zu erkennen.

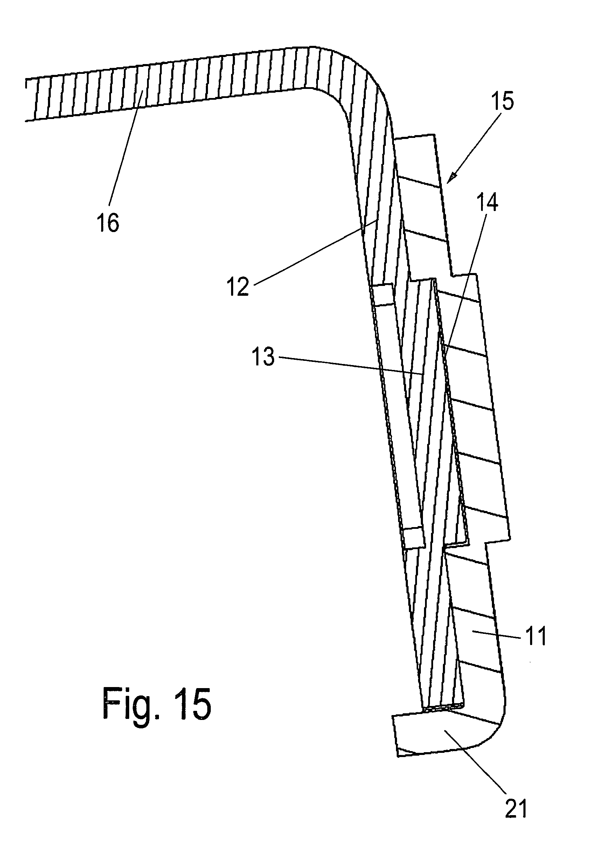

In axialer Richtung hingegen ist eine solche Relativbewegung nicht gewünscht, so dass der Vorsprung 13 der Innenlage 12 im Wesentlichen passgenau in der Sicke 14 einliegt, bevorzugt mit einem Spiel < 0,1 mm. Dieser insoweit axiale formschlüssige Eingriff ist in der Figur 15 erkennbar.

### Bezugszeichenliste

- 1: Reibring
- 2: Hals
- 3: Reibkörper
- 4: Luftkanal
- 5: Steg
- 6: Gleitelement
- 7: Innenzahnkranz
- 8: Zahn
- 9: Außenzahnkranz
- 10: Zahn
- 11: Außenlage
- 12: Innenlage
- 13: Vorsprung
- 14: Sicke
- 15: Schenkel
- 16: Steg
- 17: Biegekante
- 18: Bund
- 19: Verbindungssteg
- 20: Ausklinkung
- 21: Haltezunge
- 22: Freischnitt

## Patentansprüche

1. Als Gussteil ausgebildete, insbesondere innen belüftete Bremsscheibe, mit einem Reibring (1), der einen Innenzahnkranz (7) aufweist, und einem daran stofflich getrennt und durch einen in den Innenzahnkranz (7) eingreifenden Außenzahnkranz (9) verdrehsicher gehaltenen Hals (2) zur Verbindung mit einer Radnabe, wobei für eine radiale Relativbewegung des Reibringes (1) zum Hals (2) zwischen den Zähnen (8) eingegossene Gleitelemente (6) vorgesehen sind, **dadurch gekennzeichnet, dass** jedes Gleitelement (6) U-förmig gestaltet ist, dessen sich gegenüberliegende Schenkel (15) zwischen den einander zugewandten radial und axial ausgerichteten Seitenflächen der zugeordneten Zähne (8) angeordnet sind, wobei ein die Schenkel (15) verbindender Steg (16) radial verläuft.

2. Bremsscheibe nach Anspruch 1, **dadurch gekennzeichnet, dass** das Gleitelement (6) als Blechformteil ausgebildet ist.

3. Bremsscheibe nach einem der vorstehenden Ansprüche, **dadurch gekennzeichnet, dass** das Gleitelement (6) zweilagig, unter Bildung einer Außenlage (11) und einer Innenlage (12) ausgebildet ist.

4. Bremsscheibe nach Anspruch 3, **dadurch gekennzeichnet, dass** die Außenlage (11) und die Innenlage (12) der jeweils sich gegenüberliegenden Schenkel (15) zur axialen Verschiebesicherung miteinander korrespondierende Formschlussmittel aufweisen, wobei die Innenlagen (12) und die Außenlagen (11) radial zueinander bewegbar sind.

5. Bremsscheibe nach einem der Ansprüche 3 oder 4, **dadurch gekennzeichnet, dass** die Innenlagen (12) und die Außenlagen (11) der jeweiligen Schenkel (15) begrenzt radial zueinander bewegbar sind.

6. Bremsscheibe nach einem der Ansprüche 3 bis 5, **dadurch gekennzeichnet, dass die** Außenlage (11) des jeweiligen Schenkels (15) als separates Blechteil reib- und/oder formschlüssig mit der Innenlage (12) verbunden ist.

7. Bremsscheibe nach einem der vorstehenden Ansprüche, **dadurch gekennzeichnet, dass** das Gleitelement (6) bei ein- und zweilagiger Ausführung aus einem rechteckförmigen Blechstreifen gebildet ist.

8. Bremsscheibe nach einem der vorstehenden Ansprüche, **dadurch gekennzeichnet, dass** vor der Umformung des Blechstreifens zur U-Form im Bereich des sich ausbildenden Steges (16) eine keilförmige Ausklinkung (20) eingebracht ist.

9. Bremsscheibe nach einem der Ansprüche 1, 2, 4 bis 8, **dadurch gekennzeichnet, dass** das Gleitelement (6) bei einlagiger Ausführung einseitig formschlüssig an einem der Zähne (8, 10) gehalten ist.

10. Bremsscheibe nach einem der Ansprüche 1, 2, 4, bis 9, **dadurch gekennzeichnet, dass** das Gleitelement (6) bei einlagiger Ausbildung auf der dem Formschluss gegenüberliegenden Anlagefläche mit einer Trennbeschichtung versehen ist.

11. Bremsscheibe nach einem der Ansprüche 3 bis 8, **dadurch gekennzeichnet, dass** das Gleitelement (6) bei zweilagiger Ausbildung mit der Innenlage (12) und der Außenlage (11) formschlüssig mit dem jeweils anliegenden Zahn (8, 10) verbunden ist.

12. Bremsscheibe nach einem der vorstehenden Ansprüche, **dadurch gekennzeichnet, dass** das jeweilige Gleitelement (6) einen zugeordneten Zahn (8) des Innenzahnkranzes (7) umgreift.

13. Bremsscheibe nach einem der vorstehenden Ansprüche, **dadurch gekennzeichnet, dass** das Gleitelement (6) bei einer innen belüfteten Bremsscheibe bis in den Eingangsbereich eines Kühlkanales (4) ragt.

14. Bremsscheibe nach einem der vorstehenden Ansprüche, **dadurch gekennzeichnet, dass** der Innenzahnkranz (7), der Außenzahnkranz (9) sowie die Gleitelemente (6) innenseitig bündig verlaufen.

## Claims

1. Brake disc implemented as a casting, in particular being internally ventilated, having a friction ring (1) comprising an inner geared rim (7) and a neck (2) materially separated therefrom and retained against rotation by an outer geared rim (9), engaging in the inner geared rim (7), for connecting to a wheel hub, wherein cast-in sliding elements (6) are provided between the teeth (8) for a radial displacement of the friction ring (1) relative to the neck (1), **characterised in that** each sliding element (6) has a U-shape, the opposite legs (15) thereof being disposed between the radially and axially orientated side faces of the associated teeth (8) facing each other, wherein a web (16) connecting the legs (15) extends radially.

2. Brake disc according to claim 1, **characterised in that** the sliding element (6) is a shaped sheet metal part.

3. Brake disc according to one of the preceding claims, **characterised in that** the sliding element (6) is formed in two layers, with the formation of an outer layer (11) and an inner layer (12).

4. Brake disc according to claim 3, **characterised in that** the outer layer (11) and the inner layer (12) of the respectively opposing legs (15) have a positive locking mechanism to secure against axial displacement, and wherein the inner layers (12) and the outer layers (11) are movable radially with respect to one another.

5. Brake disc according to one of the claims 3 or 4, **characterised in that** the radial moveability of the inner layers (12) and the outer layers (11) of the respective legs (15) has a limited extent.

6. Brake disc according to one of the claims 3 to 5, **characterised in that** the outer layer (11) of a respective leg (15) is connected at least frictionally and / or positively to the inner layer (12) as a separate sheet metal part.

7. Brake disc according to one of the above claims, **characterised in that** the sliding element (6), in case of a one and two layer design, is formed as a rectangular sheet metal strip.

8. Brake disc according to one of the claims, **characterised in that** a wedge-shaped notch (20) is arranged in a region of the web (16) before forming the sheet metal strip into a U-shape.

9. Brake disc according to one of the claims 1, 2, 4 to 8, **characterised in that** the sliding element (6) is provided with one layer, said layer being held positively on one side of one of the teeth.

10. Brake disc according to one of the claims 1, 2, 4 to 9, **characterised in that** the sliding element (6) is formed with one layer, the one layer having a release coating on the contact surface lying opposite the positive locking.

11. The brake disc according to one of claims 3 to 8, **characterised in that** the sliding element (6), in case of a two-layer (12) design, with the inner layer (12) and the outer layer (11), is positively connected to the respectively abutting tooth (8, 10).

12. Brake disc according to one of the preceding claims, **characterised in that** the respective sliding element (6) encompasses an associated tooth (8) of the inner geared rim (7).

13. Brake disc according to one of the preceding claims, **characterised in that** the sliding element (6) protrudes, in the case of an internally ventilated brake disc, into an inlet region of a cooling duct. (4)

14. Brake disc according to one of the above claims, **characterised in that** the inner geared rim (7), the outer geared rim (9) and the sliding elements (6) extend flush on the inner side.

## Revendications

1. Disque de frein configurée sous la forme d'une pièce moulée en fonte, en particulier à aération intérieure, comprenant un anneau de friction (1) muni d'une couronne dentée intérieure (7) ainsi qu'un col (2) retenu de façon à empêcher la torsion moyennant une couronne dentée extérieure (9), qui se trouve en prise dans ladite couronne dentée intérieure (7), pour la raccord à un moyeu de roue, aux éléments de glissement (6) étant formés pour un mouvement relatif radial dudit anneau de friction (1) vers ledit col, qui sont coulés entre lesdites dents, **caractérisé en ce que** chaque élément (6) présente une forme en U, aux branches (15) opposées l'une à l'autre étant disposées entre les aires latérales des dents y affectées (8), qui se trouvent en face l'une à l'autre et qui sont orientées en sens radial et axial, à une bride (16) reliant lesdites branches (15) et s'étendant en sens radial.

2. Disque de frein selon la revendication 1, **caractérisé en ce que** ledit élément de glissement (6) est conçu en tant qu'une pièce moulée en tôle.

3. Disque de frein une quelconque des revendications précédentes, **caractérisé en ce que** ledit élément de glissement (6) est configuré en deux couches, à formation d'une couche extérieure (11) et une couche intérieure (12).

4. Disque de frein selon la revendication 3, **caractérisé en ce que** ladite couche extérieure (11) et ladite couche intérieure (12) desdites branches (15) respectives, qui sont opposées l'une à l'autre, comprennent des moyens de connexion géométrique en correspondance mutuel pour le blocage contre un déplacement axial, auxdites couches intérieures (12) et auxdites couches extérieures (11) étant mobile l'une vers l'autre en sens radial.

5. Disque de frein selon une quelconque des revendications 3 ou 4, **caractérisé en ce que** lesdites couches intérieures (12) et lesdites couches extérieures (11) desdites branches respectives (15) sont mobiles l'une vers l'autre en sens radial d'un degré limité.

6. Disque de frein selon une quelconque des revendications 3 à 5 **caractérisé en ce que** ladite couche extérieure (11) de la branche respective (15) est reliée en tant que pièce en tôle séparée à ladite couche intérieure(12) par friction et/ou de façon positive.

7. Disque de frein selon une quelconque des revendications précédentes, **caractérisé en ce que** ledit élément de glissement (6) est constitué par un ruban en tôle rectangulaire dans une configuration à une seule couche et à deux couches.

8. Disque de frein selon une quelconque des revendications précédentes, **caractérisé en ce qu'**une encoche en forme de coin (20) est formé dans la zone de ladite bride (16) se formant avant la transformation dudit ruban en tôle en la forme en U.

9. Disque de frein selon une quelconque des revendications 1, 2, 4 à 8, **caractérisé en ce qu'**au cas d'une configuration à une seule couche, ledit élément de glissement (6) est retenue d'un seul côté de façon positive à une desdites dents (8, 10).

10. Disque de frein selon une quelconque des revendications 1, 2, 4 à 9, **caractérisé en ce qu'**au cas d'une configuration à une seule couche, ledit élément de glissement est muni d'un revêtement de séparation à l'aire d'appui opposée à la connexion positive.

11. Disque de frein selon une quelconque des revendications 3 à 8, **caractérisé en ce qu'**au cas d'une configuration à deux couches à ladite couche intérieure (12) et ladite couche extérieure (11), ledit élément de glissement (6) est raccordé de façon positive à la dent respective adjointe (8, 10).

12. Disque de frein selon une quelconque des revendications précédentes, **caractérisé en ce que** ledit élément de glissement respectif (6) chevauche une dent (8) affectée de ladite couronne dentée intérieure (7).

13. Disque de frein selon une quelconque des revendications précédentes, **caractérisé en ce que** ledit élément de glissement (6) fait saillie jusque dans la zone d'entrée d'un canal de refroidissement (4) au cas d'un disque de frein à aération intérieure.

14. Disque de frein selon une quelconque des revendications précédentes, **caractérisé en ce que** ladite couronne dentée intérieure (7), ladite couronne dentée extérieure (9) ainsi que lesdits éléments de glissement (6) s'étendent à fleur du côté interieur.
